# EUROPEAN PATENT APPLICATION

(11) **EP 2 043 201 A1**
(43) Date of publication of application: **01.04.2009**
(21) Application number: 07253856.4
(22) Date of filing: 28.09.2007
(51) Int. Cl.: H01R 13/60, G11B 33/02, H05K 5/02

(54) **Case assembly for a portable electronic device**

(71) Applicant: Datastore Technology Co. Ltd., Wu-Ku Hsiang, Taipei Hsien (TW)
(72) Inventor: Wang, Chia-Jen, Wu-Ku Hsiang, Zaipei Hsien (TW)
(74) Representative: Hague, Alison Jane

(57) **Abstract**

A case assembly (1) for a portable electronic device (3) includes: a casing (4) adapted to hold the portable electronic device (3) ; a buckle unit (2) mounted on said casing (4); and a cable unit (100) including a data cable (101) having a first end (10) adapted to be electrically coupled to the portable electronic device (3) in the casing (4), and a second end (11) that is provided with a connector (13) and that mates releasably with the buckle unit (2).

## Description

This invention relates to a case assembly, more particularly to a case assembly for a portable electronic device, in which the case assembly can facilitate data communication between the portable electronic device and another electronic device.

Generally, a portable data storage device has the advantages of convenience and security. With the increasing demand for portability in devices capable of storing data, the portable data storage device has become a necessity among some users. Typically, a portable data storage device, such as an external hard disk, is used externally to a computer and is coupled therewith via a data cable for data communication. However, the portable data storage device is not employable without the data cable. That is to say, if the user forgets to carry the data cable, then the user cannot use the portable data storage device. Additionally, the data cable is also vulnerable to damage such as that caused by inadvertent impact and constant exposure to the environment.

US Patent No. 7104816 entitled, "EXTERNAL CASING FOR A DATA STORAGE DEVICE" partially overcomes the above drawbacks. This application provides a case assembly with the data cable separately resided therein which significantly increases the overall size of the case assembly.

Therefore, it is an object of the present invention to provide a case assembly for a portable electronic device that can facilitate data communication between the portable electronic device and another electronic device.

According to the present invention, a case assembly for a portable electronic device includes: a casing adapted to hold the portable electronic device; a buckle unit mounted on the casing; and a cable unit including a data cable having a first end adapted to be electrically coupled to the portable electronic device in the casing, and a second end that is provided with a connector and that mates releasably with the buckle unit.

Other features and advantages of the present invention will become apparent in the following detailed description of the preferred embodiment with reference to the accompanying drawings, of which:
Figure 1 is a perspective view depicting the preferred embodiment of a case assembly of the present invention in a non-use state where a cable unit is mated with a buckle unit;
Figure 2 is a perspective view of the preferred embodiment, depicting the cable unit in a state released from the buckle unit; and
Figure 3 is a perspective view of the preferred embodiment, depicting a connector of the cable unit in a state connected to a port of a computer.

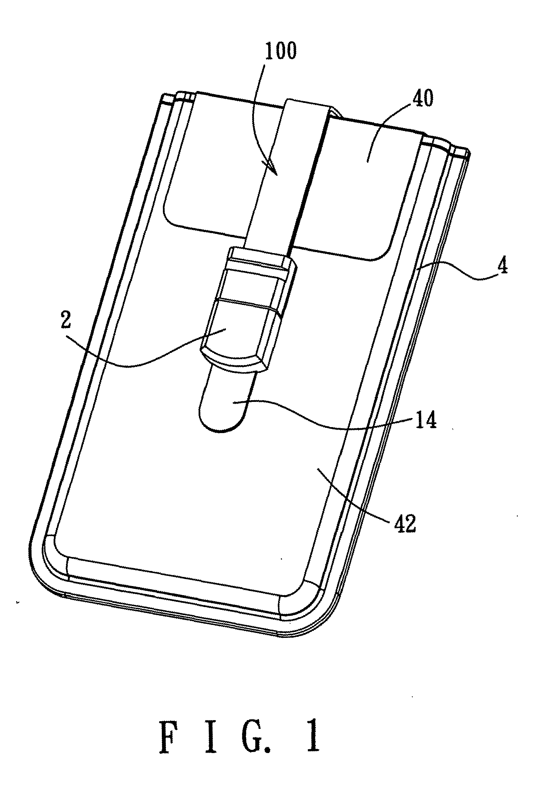

As shown in Figures 1 to 3, the preferred embodiment of a case assembly 1 for a portable electronic device 3 includes: a casing 4 adapted to hold the portable electronic device 3; a buckle unit 2 mounted on the casing 4; and a cable unit 100 including a data cable 101 having a first end 10 adapted to be electrically coupled to the portable electronic device 3 in the casing 4, and a second end 11 that is provided with a connector 13 and that mates releasably with the buckle unit 2. The casing 4 is formed of a material, and the cable unit 100 further includes an outer sheath 12 formed around at least a part of the data cable 101. The outer sheath 12 is formed of a material identical to the material of the casing 4. The casing 4 includes a pocket section 42 and a flap section 40. The pocket section 42 is formed with an opening 46 in one end and is adapted to hold the portable electronic device 3. The flap section 40 extends from the pocket section 42 to selectively cover and uncover the opening 46. The first end 10 of the data cable 101 passes through the flap section 40 of the casing 4 for electrical coupling to the portable electronic device 3. The buckle unit 2 is mounted on the pocket section 42 and is formed with a receiving hole 21 for releasably receiving the second end 11 of the data cable 101.

Furthermore, a decorative strap 14 is mounted on the casing 4 adjacent to the buckle unit 2 and on a side of the buckle unit 2 distal from where the second end 11 of the data cable 101 is releasably mated to the buckle unit 2. In this embodiment, the connector 13 of the data cable 101 is a USB connector. It should be noted that in other embodiments, it may be possible to use other types of connectors.

The casing 4 of the portable electronic device 3 may be fabricated from a leather material such as cowhide, sheepskin, artificial leather, or any other like materials. The outer sheath 12 of the cable unit 100 may be fabricated from the same material as the casing 4 as described above. Since the outer sheath 12 and the casing 4 are fabricated from the same material, the case assembly 1 achieves an attractive outer appearance.

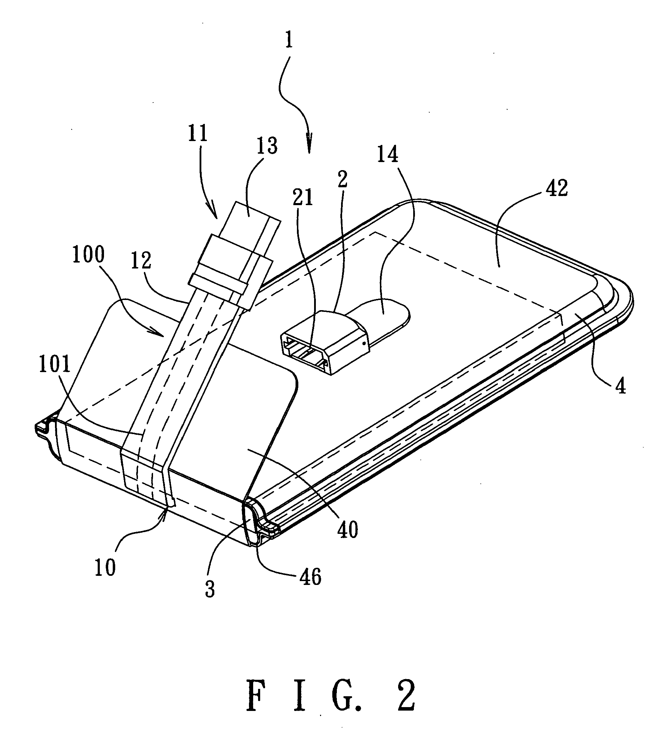

Referring to Figure 2, the buckle unit 2 is formed into a predetermined USB connector shape in the preferred embodiment to thereby be formed as a female socket for receiving the connector 13. That is, the buckle unit 2 is essentially a receiving hole 21 that permits mating of the connector 13 therewith and that faces towards the opening 46 in the pocket section 42.

When the user mates the USB connector 13 securely with the buckle unit 2 as shown in Figure 1, the flap section 40 covers the opening 46 in the pocket section 42 to encapsulate the portable electronic device 3 in order to form a compact unit which may be readily carried around by the user.

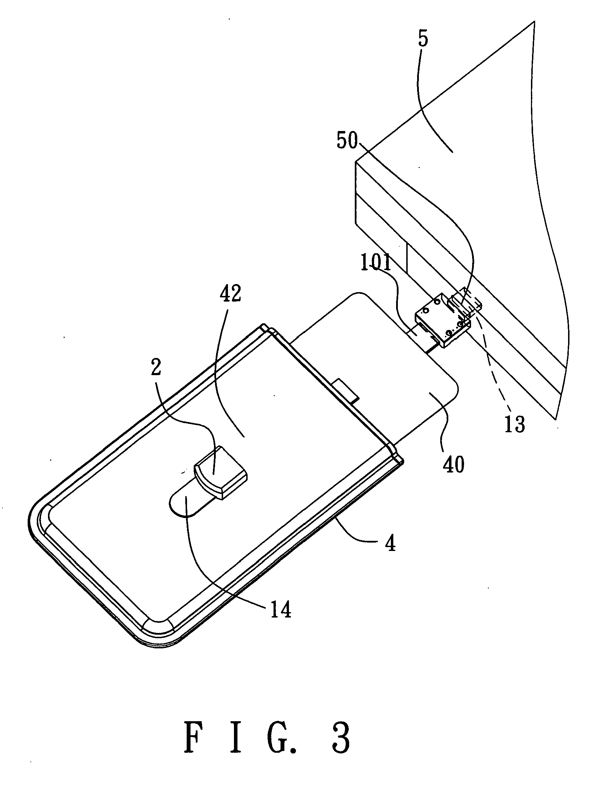

When the user wants to use the portable electronic device 3, the user first releases the connector 13 from the buckle unit 2, as shown in Figure 2. The USB connector 13 is then connected to a USB port 50 of a computer 5, as shown in Figure 3, thereby enabling data communication between the computer 5 and the portable electronic device 3. The portable electronic device 3 remains intact with the casing 4 while performing the data communication operation. When finished, the user can simply unplug the connector 13 from the computer 5 and fold it back to reengage the buckle unit 2.

## Claims

1. A case assembly (1) for a portable electronic device (3), **characterized by**:
a casing (4) adapted to hold the portable electronic device (3);
a buckle unit (2) mounted on said casing (4); and
acableunit (100) including a data cable (101) having a first end (10) adapted to be electrically coupled to the portable electronic device (3) in said casing (4), and a second end (11) that is provided with a connector (13) and that mates releasably with said buckle unit (2).

2. The case assembly (1) as claimed in Claim 1, **characterized in that:**
said casing (4) is formed of a material, and said cable unit (100) further includes an outer sheath (12) formed around at least a part of said data cable (101);
said outer sheath (12) being formed of a material identical to said material of said casing (4).

3. The case assembly (1) as claimed in Claim 1, **characterized in that:**
said casing (4) includes a pocket section (42) and a flap section (40);
said pocket section (42) being formed with an opening (46) in one end and being adapted to hold the portable electronic device (3);
said flap section (40) extending from said pocket section (42) to selectively cover and uncover said opening (46);
said first end (10) of said data cable (101) passing through said flap section (40) of said casing (4) for electrical coupling to the portable electronic device (3);
said buckle unit (2) being mounted on said pocket section (42) and being formed with a receiving hole (21) for releasably receiving said second end (11) of said data cable (101).

4. The case assembly (1) as claimed in Claim 1, further **characterized by** a decorative strap (14) mounted on said casing (4) adjacent to said buckle unit (2) and on a side of said buckle unit (2) distal from where said second end (11) of said data cable (101) is releasably mated with said buckle unit (2).

5. The case assembly (1) as claimed in Claim 1, **characterized in that:**
said connector (13) of said data cable (101) is a USB connector.
